# EUROPEAN PATENT APPLICATION

(11) **EP 2 894 852 A1**
(43) Date of publication of application: **15.07.2015**
(21) Application number: 14305049.0
(22) Date of filing: 14.01.2014
(51) Int. Cl.: H04N 13/04, H04N 21/218, H04N 21/44, H04N 21/25

(54) **Process for increasing the quality of experience for users that watch on their terminals a high definition video stream**

(71) Applicant: ALCATEL LUCENT, 92100 Boulogne-Billancourt (FR)
(72) Inventor: Marilly, Emmanuel, 91620 Nozay (FR); Gonguet, Arnaud, 91620 Nozay (FR); Tytgat, Donny, 2018 Antwerp (BE)
(74) Representative: Sayettat, Julien Christian

(57) **Abstract**

Process for increasing the Quality of Experience for users that watch on their terminals (1) a high definition video stream (2, I, V) captured by at least one video capturing device (3) and provided by a server (4) to which said users are connected through their terminals (1) in a network, said process providing for:
- collecting, for each user of a sample of the whole audience of said video stream, at least information about the position of the gaze of said user on said video stream;
- aggregating all of said collected information and analysing said aggregated information to identify the main regions of interest (R1, R2, R3, R4) for said video stream according to the number of users' gazes positioned on said regions of interest;
- selecting at least a region of interest (R1, R2, R3) of said video stream to be displayed on some terminals (1) of said users.

## Description

The invention relates to a process for increasing the Quality of Experience for users that watch on their terminals a high definition video stream captured by at least one video capturing device, such as an engine, a server and an architecture comprising means for implementing such a process.

With the arrival on the market of mobile terminals equipped with more and more sophisticated video capturing devices, such as for example the Galaxy Note 3® tablet of the Samsung® society provided with an ultra high definition (HD) camera device, the production of live ultra HD video streams at low cost should be available in a near future.

Currently, there already exist some solutions using live HD video streams, such as in the area of video conferencing, wherein the societies HP® (for Halo Telepresence) and Cisco® (for Cisco Telepresence) are well implemented, or in the area of entertainment, such as for the live display of football matches.

However, live ultra HD video streams current solutions do not guarantee a good Quality of Experience. Indeed, such video streams are generally so huge that they are not adapted to large number of existing network and/or terminals' capabilities, which cannot support in particular their great size and/or resolution.

Moreover, the exploitation or use of such ultra HD video streams can cause unsatisfaction for users receiving them on their terminals due to the richness of said streams, as for example because of the difficulty for said users to see the region of interest of a stream in the large image of said stream as displayed on their terminals, and/or because of a loss of attention of said users during said display.

To try to overcome these drawbacks, different approaches can be used to manage such HD video streams and offer a better experience to users.

In particular, in the area of video conferencing, companies such as the aforementioned HP® and Cisco® propose dedicated rooms with dedicated HD terminals, streams and connections to guarantee the communication between users.

However, such solutions are very expensive and require dedicated tools, so that they are not flexible in terms of deployment and use by basic consumers. Moreover, with these solutions, it is not possible to select automatically within a displayed HD video stream a region of interest in order to zoom on it. Thus, these approaches are not adapted to the trend of "low cost" ultra HD video streams to offer ultra HD video quality through general public tools or terminals.

Moreover, for dedicated television shows, such as football matches, a human video producer team can make the decision to zoom in real time on a specific region of the ultra HD video stream, notably by basing on heuristical knowledge and on its own production style.

However, such a solution is manual and costly, and thus not well adapted to web multimedia services that should be affordable and automated.

There are also academic works that has been performed for offering interactive selection of regions of interest in an ultra HD video stream, as for example the doctoral dissertation "Peer-to-PeeROI video streaming with Interactive Region of Interest" (Ph.D. Dissertation, Department of Electrical Engineering, Stanford University, April 2010) and the book "High-Quality Visual Experience: Creation, Processing and Interactivity of High-Resolution and High-Dimensional Video Signals" (Springer, ISBN 978-3-642-12801-1), especially the chapter "Video Streaming with Interactive Pan/Tilt/Zoom".

In particular, these solutions propose either the selection by a user of a region of interest in the image of a video stream displayed on his terminal, or the tracking of a specific object in said video stream, and develop specific encoding and compression mechanisms.

However, these solutions do not provide mechanisms for improving the users' Quality of Experience by allowing an automatic detection of the regions of interest in the video streams by basing on users' observations. In particular, these solutions do not take into account the management of groups of users for the selection of regions of interest. Moreover, as the selection of the regions of interest is based on templates or tracking, it is not adapted to unexpected events, that are likely to occur notably in a sport event such as a football match. Thus, if a particular event occurs in the video stream, the approach of these solutions does not allow to detect it as a region of interest and to zoom on it to display it on the terminals of users.

Moreover, a recent approach named "Affective Computing" is based on real time measurement of users' affects, notably thanks to emotion recognition and/or posture analysis mechanisms, and real time adaptation to these affects. However, this approach has two drawbacks, as on one hand, the sensors used to measure the users' affects are intrusive and unreliable, and as on the other hand, the real time adaptation of the approach is predefined and suffers from the same issue as the above mentioned solution based on a human video producer team.

The invention aims to improve the prior art by proposing a solution enabling to automatically adapt an ultra HD video stream to the capabilities of the terminals of users watching said video stream, especially when said terminals do not support such an ultra HD video stream, and to said users' needs and/or capabilities, i.e. when the terminal of a user has sufficient capabilities to support such an ultra HD video stream but said user is not able to focus on the regions of interest of said video stream, and thus while optimizing the use of the network, the use of the terminals and the users' understandability.

For that purpose, and according to a first aspect, the invention relates to a process for increasing the Quality of Experience for users that watch on their terminals a high definition video stream captured by at least one video capturing device and provided by a server to which said users are connected through their terminals in a network, said process providing for:
- collecting, for each user of a sample of the whole audience of said video stream, at least information about the position of the gaze of said user on said video stream;
- aggregating all of said collected information and analysing said aggregated information to identify the main regions of interest for said video stream according to the number of users' gazes positioned on said regions of interest;
- selecting at least a region of interest of said video stream to be displayed on some terminals of said users.

According to a second aspect, the invention relates to an engine for increasing the Quality of Experience for users that watch on their terminals a high definition video stream captured by at least one video capturing device and provided by a server to which said users are connected through their terminals in a network, said engine comprising:
- at least a collector module for collecting, for each user of at least a sample of the whole audience of said video stream, at least information about the position of the gaze of said user on said video stream;
- at least an estimator module that comprises means for aggregating all of said collected information and means for analysing said aggregated information to identify the main regions of interest for said video stream according to the number of users' gazes positioned on said regions of interest;
- at least a selector module adapted for selecting at least a region of interest and for interacting with said server so that said selected region of interest will be displayed on some terminals of said users.

According to a third aspect, the invention relates to a server for providing a high definition video stream captured by at least one video capturing device to users connected through their terminals to said server in a network, so that said users watch said video stream on their terminals, said server comprising means for interacting with such an engine to increase the Quality of Experience for said users, said means comprising:
- a focus module comprising means for interacting with the selector module of said engine to build at least one ROI video stream comprising a region of interest selected by said selector module;
- a streamer module comprising means for providing the ROI video stream to some of said users.

According to a fourth aspect, the invention relates to an architecture for a network for providing to users connected through their terminals a high definition video stream to be watched by said users on said terminals, said video stream being captured by at least one video capturing device, said architecture comprising:
- an engine for increasing the Quality of Experience for users, comprising:
   ■ at least a collector module for collecting, for each user of at least a sample of the whole audience of said video stream, at least information about the position of the gaze of said user on said video stream;
   ■ at least an estimator module that comprises means for aggregating all of said collected information and means for analysing said aggregated information to identify the main regions of interest for said video stream according to the number of users' gazes positioned on said regions of interest;
   ■ a selector module adapted for selecting at least a region of interest to be displayed on some terminals of said users;
- a server to which users are connected through their terminals, said server providing said high definition video stream to said users, said server further comprising:
   ■ a focus module comprising means for interacting with the selector module of said engine to build at least one ROI video stream comprising a region of interest selected by said selector module;
   ■ a streamer module comprising means for providing the ROI video stream to some of said users.

According to a fifth aspect, the invention relates to a computer program adapted to perform such a process.

According to a sixth aspect, the invention relates to a computer readable storage medium comprising instructions to cause a data processing apparatus to carry out such a process.

Other aspects and advantages of the invention will become apparent in the following description made with reference to the appended figures, wherein:
- figure 1 represents schematically the steps of a process according to the invention for managing the display of a high definition video stream on terminals of users;
- figure 2 represents schematically an architecture for implementing a process according to the invention;
- figure 3 represents diagrammatically an embodiment for the step of identification of the main regions of interest of a process according to the invention;
- figures 4a, 4b represent schematically and respectively a particular embodiment of the step for identification of regions of interest of the process of the invention, wherein the high definition video stream is provided by several synchronised video capturing devices.

In relation to those figures, a process for increasing the Quality of Experience for users that watch on their terminals 1 a high definition video stream 2 captured by at least one video capturing device 3 would be described below.

In particular, the process can be performed by an adapted computer program, or by a computer readable storage medium comprising instructions to cause a data processing apparatus to carry out said process.

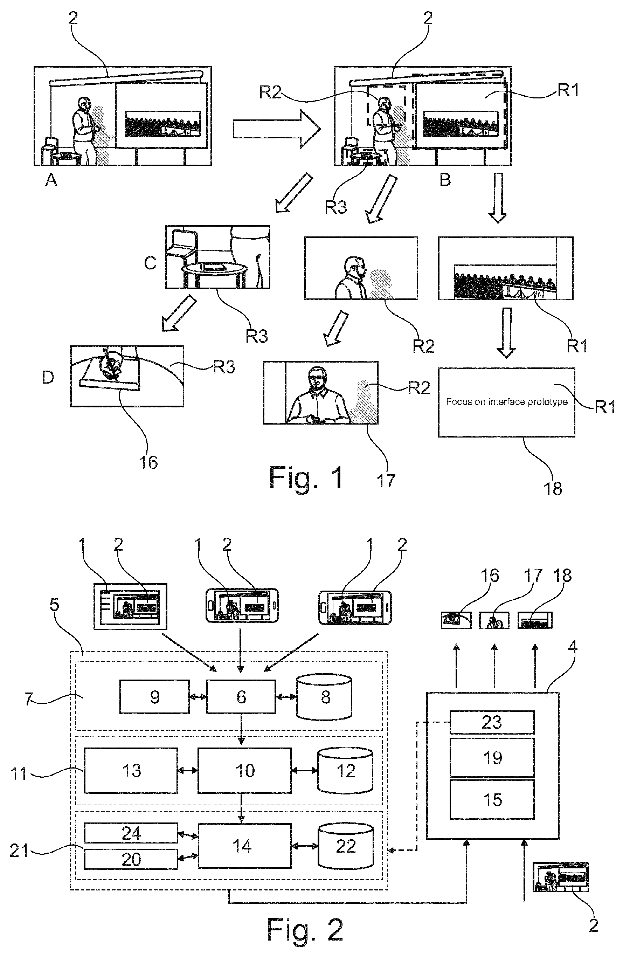

Figure 2 represents an architecture for a network for providing such a video stream 2, said architecture comprising notably a server 4 to which said users are connected through their terminals 1 and that provides to said users said video stream 2 that is captured by at least one video capturing device 3 registered and/or connected to said server.

This architecture generally relies on a video network infrastructure that can support various kinds of implementations and elements, such as a Multipoint Control Unit (MCU) infrastructure, as described in further details by the Internet Engineering Task Force (IETF) Clue working group, for simultaneously implementing several video conference conversations, or a Content Delivery Network (CDN) infrastructure.

Thus, this architecture can be implemented into a basic video conferencing infrastructure, such as those provided by the HP® and Cisco® societies, into an infrastructure for entertainment video streams, such as a live diffusion of a sport event or any other type of television show, into a virtual class room infrastructure, into a video surveillance infrastructure, or more generally into any infrastructure for providing an event video stream having at least one main place filmed with at least one video capturing device 3 such as a camera and an audience of at least one remote user watching said live event video stream on his own terminal 1.

As represented on the figures, the terminals 1 can be notably mobile terminals, such as a tablet or a smartphone, said terminals being connected as "clients" to the server 4 and comprising each a screen on which their users watch a video stream 2 provided by said server.

As represented on figure 1, the process comprises an initial step A wherein the video stream 2 is displayed in full size on terminals 1, the resolution of said displaying depending on the technical capabilities of said terminal and/or of the network connection at the time of said displaying. In particular, the video stream 2 is a video capture of a lecture wherein a presenter stands in front of a white screen on which a file with slides, such as a Powerpoint® file, is displayed.

For increasing the Quality of Experience of users, the architecture also comprises a dedicated engine 5, the server 4 comprising means for interacting with said engine to do such an increasing. In particular, the server 4 can be adapted to provide to users a specific "crowd service" to which said users can connect for benefiting from such a Quality of Experience increasing, notably according to their needs and/or their available technical capabilities.

The process provides at first for collecting, for each user of at least a sample of the whole audience of the video stream 2, at least information about the position of the gaze of said user on said video stream.

In particular, the sample of audience can concern the whole audience or only a specific part of said audience that watches the video stream 2 at full size on their terminals 1, as long as said sample enables to see with enough relevancy the main trend for positions of gazes on said video stream and/or to efficiently detect the appearance of new positions of gazes.

For example, the sample of audience can be new incoming users for taking into account new possible positions of gazes, or users that have terminals 1 and/or network connection with sufficient technical capabilities for displaying in full size the ultra high definition with high resolution, as for example a fibre connection and/or a big television high definition screen.

To do so, the engine 5 comprises at least a collector module 6 for collecting, for each user of at least a sample of the whole audience of the video stream 2, at least information about the position of the gaze of said user on said video stream.

In particular, the terminals 1 can provide to the collector module 6 information about the position of the gaze of users on their screen, so that said module will deduce the position of said gaze on the video stream 2 displayed on said screen. To do so, the terminals 1 comprise each dedicated means that support gaze analysis functionalities for determining the position of the gaze of their respective users on their respective screens.

Moreover, if the terminals 1 comprise advanced support gaze analysis functionalities for determining directly the position of the gaze of their users on the video stream 2 displayed on their screens, which is for example already the case for smartphones such as the Optimus G Pro® and the Galaxy S4® provided respectively by LG® and Samsung® societies, or even a video player device integrating a gaze analyser for analysing a video capture of their users provided by a capturing device integrated in said terminals, said terminals can send directly such information about the position of gaze of their users on the video stream 2 to the collector module 6.

Moreover, the terminals 1 can send to the collector module 6 information about the displaying of the video stream 2 on said terminals, such as information about the identifier of said video stream, the position of said video stream on the screen of said terminals, the size of the displaying image of said terminal on said screen, the timestamp and/or the resolution of said displaying image on said screen, said collector module further using said displaying information to map the position of the gaze on the screen of a terminal 1 with the position of the video stream 2 on said screen to deduce the position of said gaze on the said video stream, if necessary.

In relation to figure 2, the terminals 1 send to the collector module 6 information about the position of the gaze of their respective users on their screens and/or on the video stream 2, and eventually information about said displaying, as described just above.

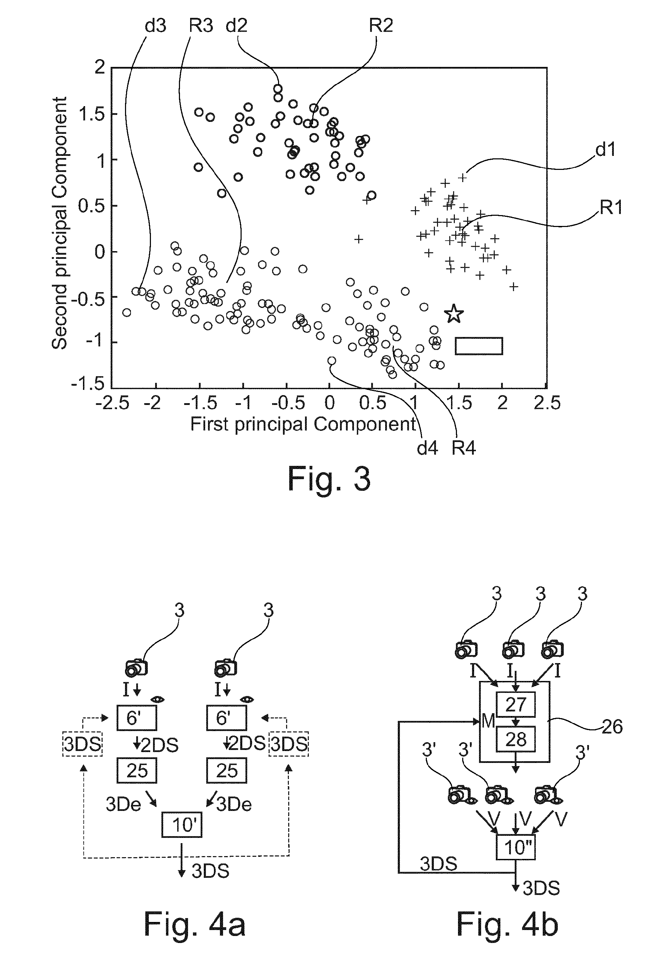

For example, as depicted on figure 3, the positions of gazes, which are represented by dots d₁, d₂, d₃, d₄, can be given respectively by a couple of geometrical coordinates with a first principal component, as an abscissa, and a second principal component, as an ordinate. Moreover, the size of display of the video stream 2 on a terminal 1 can be given by a width and a height, and the display information can also comprise the format of the display (as for example a 4:3 format), the format of the coding (as for example according to the h264 standard), or the type of the terminal 1 (as for example a Samsung S4® smartphone).

On figure 2, the engine 5 comprises a collector device 7 comprising the collector module 6, such as a database 8 aiming at storing data related to the positions of gazes of the users on their terminals 1, the positions of said gazes on the video streams 2 that were previously displayed on said terminals, the identifiers (ID) of said video streams and/or the description of said video streams.

Besides, the process can provide for further tracking the collected positions of gazes of users for predicting the next positions of said gazes, so as to improve the detection of such gazes. To do so, the collector device 7 of the engine 5 comprises a tracker module 9 adapted to track the collected positions of the gazes of users for doing such predictions. In particular, the tracker module 9 can implement a Proportional Integral Derivative (PID) controller or algorithm, such as a Kalman filter to predict the next positions or trajectories of gazes of users on the video stream 2.

The process further provides for aggregating all of the collected information about positions of gazes on the full video stream 2 and for analysing said aggregated information to identify the main regions of interest R1, R2, R3, R4 for said video stream according to the number of users' gazes positioned on said regions of interest.

To do so, the engine 5 comprises at least one estimator module 10 that comprises means for aggregating all of the collected informations from the collector module 6 and means for analysing said aggregated information to identify the main regions of interest R1, R2, R3, R4 for the video stream 2 according to the number of users' gazes positioned on said regions of interest. In relation to figure 1, the process comprises a step B wherein the main regions of interest R1, R2, R3 of the video stream 2 are identified as such, said regions of interest being each a specific part of said video stream comprising the more interesting objects in said video stream, i.e. the objects on which large number of users' gazes are positioned. In particular, the regions of interest R1, R2, R3 concern respectively the file with slides displayed on the white screen, the head of the presenter standing in front of said white screen, and the table standing near said white screen on which the presenter has let a pen and a notebook for his oral presentation of said displayed file.

Generally speaking, the estimator module 10 identifies the main regions of interest R1, R2, R3, R4 by basing on a crowd approach, as said module bases on the repartition of gazes positioned on the video stream 2 to identify the main regions of interest as the parts of said video stream wherein a large number of gazes are concentrated. To do so, in relation to figure 3, the estimator module 10 can be adapted to implement a Principal Component Analysis (PCA) algorithm to analyse the aggregated information coming from the collector module 6 and thus to identify the main regions of interest according to the main groups of users' gazes appearing upon said analysis and depicted on said figure.

In particular, as the more users are watching a region R1, R2, R3, R4 of the video stream 2, the more interesting said region is, the estimator module 11 can be adapted to ponderate the identified main regions of interest R1, R2, R3, R4 according to their related number of gazes.

In relation to figure 2, the engine 5 comprises an analyser device 11 comprising the estimator module 10, such as a database 12 aiming at storing data related to the different identified regions of interest R1, R2, R3, R4 of the video stream 2, which can notably comprise the vector and the class of each of said regions of interest, the number of users associated to said regions of interest, the identifier and the class of said associated users.

Besides, the process can provide for further tracking the identified regions of interest to identify the evolution of the number of users' gazes positioned on said regions of interest, so as to improve the further identification of such regions of interest. To do so, the analyser device 11 of the engine 5 comprises a trend module 13 adapted to track the identified regions of interest to do such an evolution identification.

Once the main regions of interest R1, R2, R3, R4 of the video stream 2 have been identified, the process provides for selecting at least a region of interest R1, R2, R3 to be displayed on some terminals 1 of the users.

To do so, the engine 5 comprises at least a selector module 14 adapted for selecting, among the regions of interest identified by the estimator module 10, at least a region of interest and for interacting with the server 4 so that said selected region of interest will be displayed on some terminals 1 of the users.

In the same way, the server 4 comprises a focus module 15 comprising means for interacting with the selector module 14 to build at least one ROI video stream 16, 17, 18 comprising a region of interest R1, R2, R3 selected by said selector module, such as a streamer module 19 comprising means for providing the ROI video stream 16, 17, 18 to some of the users.

Moreover, in relation to figure 1, the process comprises consecutives steps C, D wherein three main regions of interest R1, R2, R3 are selected and specific ROI video streams 16, 17, 18 are built from said selected regions of interest to be displayed on some terminals 1 of the users.

In particular, the selector module 14 is adapted to determine the number and the size of the regions of interest R1, R2, R3 to select from the main full high definition video stream 2.

To do so, the selector module 14 is notably adapted to associate the users watching the video stream 2 to the identified regions of interest R1, R2, R3, R4 provided by the estimator module 10. For example, in relation to the double arrows of figure 3, the selector module 14 implements a basic Euclidian distance algorithm to determine to which region of interest R3, R4 a user can be classified according to the position of the gaze of said user on the full video stream 2, which is deductible from the group of gazes depicted on the figure 3 to which the gaze of said user is geometrically closest.

Generally speaking, the selector module 14 can implement rules which define specific policies for the selection of the regions of interest R1, R2, R3 to be displayed on some terminals 1 of users, said rules defining the characteristics of the regions of interest R1, R2, R3 to be selected among all of the identified regions of interest R1, R2, R3, R4, such as for example their size, their total number and/or their resolution, and thus notably according to specific parameters of each of said identified region of interest, such as their number of associated users, the concentration or dispersion of gazes into them.

The selector module 14 can also implement rules for defining the selection of regions of interest R1, R2, R3 to be displayed according to technical parameters such as the capabilities of the network and/or the terminals 1 of the users, or other Quality of Service measurements.

For example, the selector module 14 can implement a rule for selecting three regions of interest R1, R2, R3 to be displayed if the total number of users watching the full video stream 2 is strictly greater than ten, or a rule for decreasing the number of selected regions of interest R1, R2, R3 and/or the size or the resolution of said selected regions of interest if the network bandwidth decreases.

To do so, the engine 5 may also comprise an optimizer module 20 adapted to interact with the selector module 14 for optimizing the selection of regions of interest R1, R2, R3 according to information about at least the number of users' gazes positioned on said regions of interest and/or technical capabilities of the network and/or the terminals of users. Thus, the process can maintain the more efficient service while minimizing the resources consumption.

In relation to figure 2, the engine 5 comprises a decision device 21 comprising the selector module 14 and the optimizer module 20, such as a database 22 aiming at storing data related to the different selected regions of interest R1, R2, R3 of the video stream 2 to be displayed, notably in relation to their associated users.

In the same way, the server 4 comprises a Quality of Service (QoS) analyser module 23 comprising means for providing to the optimizer module 24 information about technical capabilities of the network and/or the terminals 1 through which users are connected to said server, so as to optimize the selection of regions of interest R1, R2, R2 according at least to said information.

For further optimizing the selection of regions of interest R1, R2, R3 to be displayed, the process can notably provide for tracking, for each identified region of interest R1, R2, R3, the number of users' gazes positioned on said region of interest, so as to send an alert for identifying new regions of interest R1, R2, R3, R4 when one of said number changes significantly. In particular, this alerting step of the process can be proposed as a service to which users can subscribe.

To do so, in relation to figure 2, the decision device 21 comprises an alert module 24 adapted to do such a tracking so as to send such an alert for identifying new regions of interest R1, R2, R3, R4 when it is necessary.

For example, the alert module 24 can be adapted to track the number of users' gazes on a specific region of interest R1, R2, R3, R4 by regularly comparing said number with a specific threshold associated to said region of interest, so as to send an alert to users, notably a visible alert on the full video stream 2, for prompting them to watch said specific region of interest when said number reaches said threshold, so that said specific region of interest will further be selected by the selector module 14 to be displayed in a greater size in a dedicated ROI video stream 16, 17, 18.

On the contrary, the alert module 24 can be adapted to send an alert to the estimator module 10 for identifying new regions of interest R1, R2, R3, R4 instead of a specific region of interest when the number of users' gazes positioned on said specific region of interest is below the specific threshold of said specific region of interest.

In relation to figure 1, the region of interest R3 concerning the table standing near the white screen is considered as minor compared to the other regions of interest R1, R2 concerning respectively the file displayed on the white screen and the head of the talking presenter, so that the region of interest R3, contrary to the other ones R1, R2, is not likely to be selected during step C to be displayed through a dedicated ROI video stream 16, 17, 18 to some terminals 1.

However, as the presenter moves towards the table and starts to write on the notebook he has let on said table, the number of users' gazes on the corresponding region of interest R3 increases, so that the alert module 24 may send a visible alert to all users for prompting them to watch the region of interest R3, and said region of interest will be displayed at step D on some terminals 1 of said users through a dedicated ROI video stream 16.

On figure 1, the video stream 2 is provided by a sole video capturing device 3 and comprises a sole video view. According to another embodiment represented on figures 4, the video stream 2 comprises several synchronised video views V and is provided from several video capturing devices 3. For example, several video capturing devices 3 can be placed around a scene to be visualised by users on their terminals 1, said scene being a meeting room for a video conferencing scenario, or a football game in a stadium.

For that particular embodiment, the main regions of interest of the video stream 2 are identified from processing all the video views V of said video stream.

To do so, it could be possible to process each view V as a single video stream, but it does not work well, as a user watching a video view V can position his gaze on an element that is not visible from another user that watches another video view V of the same video stream 2. Thus, there is no assured coherence between the regions of interest identified into each video view V of a video stream 2, as said regions of interest may be identified individually into each video view V according to a 2D approach, which does not facilitate an automated system to make accurate decisions on the regions of interest that hold the most importance.

To solve this problem, an approach can consist in the generation of a 3D saliency map for gathering more consistently the regions of interest identified in each 2D video view V of a video stream 2. Indeed, such a consistent gathering is possible because two regions of interest identified on two different video views V of a same video stream 2 can focus on a same 3D object of said video stream.

To do so, certain heuristic technics are often used, such as algorithms relying on the calculation of peaks in an umpteenth derivative of a surface curvature, or on the morphing of existing 2D maps of regions of interest that are built from each video view V from the identified regions of interest of said video view onto new and slightly different 3D models.

Other known approaches are based on the use of a human observer to track into a video view V of a video stream 2 what is being looked by a single user watching this video view V, i.e. what is being looked at a single viewing angle. But, as stated before, the human observer can look at an object that is temporarily hidden from other video views V, due for example to occlusions, so that there is a risk that a false region of interest would be identified and further selected to be displayed for users of the video stream 2, which will be obviously prejudicial for the Quality of Experience of said users.

Moreover, these approaches are generally not adapted for an identification of regions of interest in an online and interactive manner.

Thus, for fitting with this particular embodiment and solving the above mentioned drawbacks, the process of the invention can provide for using the behaviour of at least a sample of users for collaboratively identified relevant regions of interest of a video stream 2 comprising several video views V, as it does for a video stream 2 provided by a sole video capturing device 3.

In relation to figure 4a, the video views that will be processed are video inputs I that have been each captured by a video capturing device 3. This video inputs I are each shown in parallel to at least one individual user, so that multiple users watch simultaneously several video inputs I of the same video stream 2.

In the same time, each video input I is sent to an individual collector module 6', which can be notably technically similar to the collector module 6 of the engine 5 of figure 2, so as to collect at least information about the position of the gaze of the user watching said video input, as the collector module 6 of figure 2 does.

Moreover, the process provides for creating for each video view a 2D saliency map 2DS localising the regions of interest of said video view, and thus for creating from all of said 2D saliency maps a global 3D saliency map 3DS so as to identify the main regions of interest of the video stream 2.

In relation to figure 4a, the collector modules 6' are each adapted to create such a 2D saliency map wherein the regions of interest of their corresponding video input I are localised.

In particular, the collector modules 6' can provide 2D saliency maps wherein regions of interest are accompanied by reliability values. The collector modules 6' can also have means for temporarily filtering information to provide a more robust performance for gaze collection, notably means for using previously collected data if new data are unavailable due for example to packet loss or insufficient reliability.

In particular, the process can further provide for transforming each 2D saliency map 2DS so as to create back projections of the regions of interest of said 2D saliency map and thus to create a 3D saliency estimate 3De for said 2D saliency map from said back projections, so that the global 3D saliency map 3DS will be created upon combination of all 3D saliency estimates 3De.

In relation to figure 4a, the collector modules 6' each send their created 2D saliency maps 2DS to an individual back project module 25 that comprises means for creating such back projections and means for creating such 3D saliency estimates 3De from said back projections.

Such a transformation of 2D saliency maps 2DS is notably enabled by the calibration data that are assumed to be available from the capturing devices 3. For example, the back projections of regions of interest of a video input I can be obtained in line with the known pinhole camera model. Thus, if 2D video inputs V are used, the regions of interest of said video inputs are simply back projected and the whole depth range of the 3D saliency estimate 3De is given a uniform reliability value, because the depth of a region of interest cannot be known without information about the depth of the corresponding object of the video stream 2, which is not determinable from a single video view.

Moreover, the back project modules 25 can use complementary information if they are available, such as for example a 2d+z data, i.e. a depth value per pixel, so as to limit the possible 3D regions of interest. Thus, the process can in that case discard the possible 3D regions of interest in front of the relevant objects as they cannot really be considered as interesting, so as to effectively give a better 3D saliency estimate 3De for a given video view I.

Thus, the back project modules 25 all send their 3D saliency estimate 3De to an estimator module 10', which can be technically similar to the estimator module 10 of the engine 5 of figure 2, while implementing additional means for combining all the 3D saliency estimates 3De to create a global 3D saliency map 3DS wherein main regions of interest R1, R2, R2, R4 of the video stream 2 are identified and localised.

For example, the estimator module 10' can comprising means for simply totalling the individual 3D saliency estimated 3De and then limiting the reliability of the obtained regions of interest R1, R2, R3, R4 to a certain value depending notably on the reliability values of the original video views V. But the estimator module 10' can also implement more complex methods, such as for example 3D blob detection methods using the individual estimates 3De and including prior information into the hypothesis construction.

The process can also provide for using other image processing and/or computer techniques for refining the saliency estimates 3De and the resulting global 3D saliency map 3DS, such as techniques relying on segmentation information and or on object recognition with associated models.

In relation to figure 4b, the video views that are processed to create the 3D saliency map 3DS are virtual camera views V that have been generated from a scene model M built from video inputs I that have been each captured by a video capturing device 3. In particular, the video inputs I are video streams in the 2D format, the 2D+z format, or any other type of format.

To do so, a virtual director device 26 collects the synchronised video inputs I of a same video stream 2 and uses said video inputs to generate such virtual camera views V by implementing artificially virtual cameras 3' that provide each one of said virtual views. In particular, the virtual director device 26 creates virtual camera views V with a sufficient number for assuring a sufficient sampling of the 3D space wherein the scene to be visualised occurs, especially in cases when the available number of real video capturing devices 3 is limited.

Afterwards, all of the virtual camera views V are used by a 3D saliency map creator device 10" that can notably encompass not only the features of the estimator module 10', but also those of the collector modules 6' and of the back project modules 25 of figure 4a, so as to create a 3D saliency map 3DS for localising the main regions of interest R1, R2, R3, R4 of the video stream 2, the devices 26, 10" further being implemented into an engine 5 as represented on figure 2 or any other type of engine for providing to users connected to a video provider server 4 an online service for improving Quality of Experience.

More precisely, the virtual director device 26 comprises a scene module 27 comprising means for collecting video inputs I of the video stream 2 provided from individual video capturing devices 3 and means and for building and/or updating a scene model M from said video inputs, such as a module 28 for generating from said scene model virtual cameras 3' that provide each a virtual camera view V, the creator device 10" creating from said virtual camera views a 3D saliency map 3DS.

The scene model M can have various degrees of complexity. For example, a very simple scene model can only consists out of the frames of the video inputs I that are received at the time instance, and in that case the module 28 will generate virtual camera views V that will be most likely limited to a cropped version of the input frames or some interpolated frames in between nearby frames. Moreover, a more complex scene model can introduce some geometric knowledge in order to have more flexibility in the way to generate virtual views V.

The process can further provide for analysing the created 3D saliency map 3DS to optimize the creation of a further 3D saliency map 3D.

In relation to figure 4a, the estimator module 10' is adapted to feed back the generated 3D saliency map 3DS to each of the collector modules 6'. Thus, the collector modules 6' can usefully fine tune their tracking of the position of users' gazes on their corresponding video inputs I by basing on the more global measurements indirectly provided by the 3D saliency map 3DS.

Moreover, the feed back of generated 3D saliency maps 3DS allows for less accurate collector modules 6' to be used by soft limiting the output domain. For example, when a normal video capturing device 3 is used for gaze detection, the results are usually not very dependable, whereas, with the provided 3D saliency map 3DS, the process can snap the gazes to modes with higher density, thus reducing the output domain and increasing the chance of an accurately tracked region of interest.

In relation to figure 4b, the creator device 10" is adapted to feed back the generated 3D saliency map 3DS to the director device 26, so as to create in preference virtual camera views V that are focusing on already identified regions of interest R1, R2, R3, R4 of the video stream 2.

More generally, the director device 26 can take into account a certain number of complementary factors in addition to the fed back previous 3D saliency map 3DS for the selection of the virtual cameras 3' to be generated by the module 28. In particular, the director device 26 can take into account the currently known scene model M, as well as the viewpoint history for a current user, which can notably be provided by a database technically similar to the database 22 of figure 2 for storing data related to the different selected regions of interest R1, R2, R3 and their associated users, so as to provide said user with sufficient variations in terms of content and viewing angles.

The director device 26 can also take into account the video inputs I sampling history for ensuring a sufficient sampling of the 3D space wherein the scene to be visualised occurs. Indeed, for detecting new regions of interest R1, R2, R3, R4, the process can occasionally need to sample views that do not necessarily focus on current regions of interest.

However, this does not mean that the process needs to visualize totally meaningless regions of a video input I, as an image of said video input can be framed in a way that the area of the scene to be sampled is sampled with other areas of said scene that contain regions of interest. Moreover, overview shots are a popular technique in video technique and can also be used to resample large areas in the 3D space of the scene to be visualised.

More generally, the generated virtual views V should fully exploit the available knowledge of the scene to be visualised, so as to allow the creation of a 3D saliency map 3DS as accurate as possible. In addition, when 3D information is available in the scene model M, the virtual views V generated from said scene model should also include such information in order to optionally enable creation of individual 2D saliency maps 2DS for each of said views by the creator device 10" to which said virtual views V should be individually provided by the director device 26 for allowing the final creation of the 3D saliency map 3DS by said creator device 10".

Therefore, the obtained 3D saliency map can be provided to an internal interface, but more particularly to a public external interface, such as an online network cloud-based video service provider, said service provider being for example implemented by an architecture according to figure 2 that comprises a server 4 cooperating with an engine 5 for providing online improvement of Quality of Experience for users that are connected to said server for watching the video stream 2 by focusing on the interesting elements of said video stream according to the own behaviour of said users. The obtained 3D saliency map can also be used for enhancing media coding or indicating anomalies in the video stream 2.

However, the use of such a 3D saliency map for focusing on regions of interest R1, R2, R3, R4 in a global video stream 2 is obviously reactive to the events happening in said video stream, as a user watching a view I of said video stream first needs to notice such an event and further to position his gaze of said event before the creation of a dedicated ROI video stream 16, 17, 18 can occur. Thus, this imposes a certain delay.

To alleviate this problem of delay, although it is generally accepted as the live show directors are used to deal with, there exist at least two methods. In particular, the instant replay method relies on the correlation of sudden spikes in the 3D saliency map 3DS with a domain specific anomaly detector, so as to estimate when an instant replay could be useful. Moreover, in an offline system characterized by offline asynchronous viewings of the views V, I of the video stream 2 by users, the 3D saliency map 3DS can be built and refined in order to systematically improve the viewing experience as more users have seen said video stream.

Consequently, the process allows inattentive users, i.e. the users who are looking at something else while watching the video stream 2, to focus on the important elements of said video stream, said elements being determined by the behaviour of a large sample of said users watching said video stream, so as to build for said inattentive users from the full sized video stream 2 a ROI video stream 16, 17, 18 that is centred on at least one of said important element. This approach is effective because it avoids static rules as well as unreliable users' observations to track regions of interest R1, R2, R3, because it relies on the postulate that the majority of users will focus their attention at the most interesting elements in the video stream 2.

Moreover, the process alternatively allows to increase the Quality of Experience of users by providing to them ROI video streams 16, 17, 18 in high definition and centred on what matters, notably if the technical capabilities of their terminals 1 and/or on their network connection are not supporting the display of the full sized high definition video stream 2.

As a matter of fact, the process can provide for building and sending ROI video streams 16, 17, 18 centred on the main regions of interest R1, R2, R3 of the video stream 2 to all users watching the video stream 2, if the goal is to solve both the problems of inattention and of lack of technical capabilities, or to send such ROI video streams 16, 17, 18 only to the users encountering lack of technical capabilities.

Generally speaking, the process also allows to create several high definition video streams 16, 17, 18 from a sole full sized high definition video stream 2, and can also be associated to a video orchestrator device in order to create a dynamic video stream with an automatic video director.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Process for increasing the Quality of Experience for users that watch on their terminals (1) a high definition video stream (2, I, V) captured by at least one video capturing device (3) and provided by a server (4) to which said users are connected through their terminals (1) in a network, said process providing for:
- collecting, for each user of a sample of the whole audience of said video stream, at least information about the position of the gaze of said user on said video stream;
- aggregating all of said collected information and analysing said aggregated information to identify the main regions of interest (R1, R2, R3, R4) for said video stream according to the number of users' gazes positioned on said regions of interest;
- selecting at least a region of interest (R1, R2, R3) of said video stream to be displayed on some terminals (1) of said users.

2. Process according to claim 1, **characterized in that** the video stream comprises several synchronised video views (I, V), the main regions of interest of said video stream being identified from processing said video views.

3. Process according to claim 2, **characterized in that** the video views are video inputs (I) that have been each captured by a video capturing device (3).

4. Process according to claim 2, **characterized in that** it that the video views are virtual camera views (V) that have been generated from a scene model (M) built from video inputs (I) that have been each captured by a video capturing device (3).

5. Process according to any of claims 2 to 4, **characterized in that** it provides for creating for each video view (I, V) a 2D saliency map (2DS) localising the regions of interests of said video view, and thus for creating from all of said 2D saliency maps a global 3D saliency map (3DS) so as to identify the main regions of interest of the video stream.

6. Process according to claim 5, **characterized in that** it provides for transforming each 2D saliency map (2DS) so as to create back-projections of the regions of interest of said 2D saliency map and thus to create a 3D saliency estimate (3De) for said 2D saliency map from said back-projections, the global 3D saliency map (3DS) being created upon combination of all 3D saliency estimates (3De).

7. Process according to claim 5 or 6, **characterized in that** it provides for analysing the created 3D saliency map (3DS) to optimize the creation of a further 3D saliency map (3DS).

8. Engine (5) for increasing the Quality of Experience for users that watch on their terminals (1) a high definition video stream (2, I, V) captured by at least one video capturing device (3) and provided by a server (4) to which said users are connected through their terminals (1) in a network, said engine comprising:
- at least a collector module (6, 6') for collecting, for each user of at least a sample of the whole audience of said video stream, at least information about the position of the gaze of said user on said video stream;
- at least an estimator module (10, 10', 10") that comprises means for aggregating all of said collected information and means for analysing said aggregated information to identify the main regions of interest (R1, R2, R3, R4) for said video stream according to the number of users' gazes positioned on said regions of interest;
- at least a selector module (14) adapted for selecting at least a region of interest (R1, R2, R3) and for interacting with said server so that said selected region of interest will be displayed on some terminals (1) of said users.

9. Engine (5) according to claim 8, **characterized in that** it further comprises a tracker module (9) adapted to track the collected positions of the gazes of users for predicting the next positions of said gazes.

10. Engine (5) according to claim 8 or 9, **characterized in that** it further comprises a trend module (13) adapted to track the identified regions of interests (R1, R2, R3, R4) to identify the evolution of the number of users' gazes positioned on said regions of interest.

11. Engine (5) according to any of claims 8 to 10, **characterized in that** it further comprises an alert module (24) adapted to track, for each identified region of interest (R1, R2, R3, R4), the number of users' gazes positioned on said region of interest, so as to send an alert for identifying new regions of interest (R1, R2, R3, R4) when one of said number changes significantly.

12. Engine (5) according to any of claims 8 to 11, **characterized in that** it further comprises a optimizer module (20) adapted to interact with the selector module (14) for optimizing the selection of regions of interests (R1, R2, R3) according to information about at least the number of users' gazed positioned on said regions of interest and/or technical capabilities of the network and/or the terminals (1) of users.

13. Server (4) for providing a high definition video stream (2, I, V) captured by at least one video capturing device (3) to users connected through their terminals (1) to said server in a network, so that said users watch said video stream on their terminals (1), said server comprising means for interacting with an engine (5) according to any of claims 8 to 12 to increase the Quality of Experience for said users, said means comprising:
- a focus module (15) comprising means for interacting with the selector module (14) of said engine to build at least one ROI video stream (16, 17, 18) comprising a region of interest (R1, R2, R3) selected by said selector module;
- a streamer module (19) comprising means for providing the ROI video stream (16, 17, 18) to some of said users.

14. Server (4) according to claim 13 when dependent on claim 12, **characterized in that** it comprises a Quality of Service (QoS) analyser module (23) comprising means for providing to the optimizer module (20) of the engine (5) information about technical capabilities of the network and/or the terminals (1) through which users are connected to said server, so as to optimize the selection of regions of interest (R1, R2, R3) according at least to said information.

15. Architecture for a network for providing to users connected through their terminals (1) a high definition video stream (2, I, V) to be watched by said users on said terminals, said video stream being captured by at least one video capturing device (3), said architecture comprising:
- an engine (5) for increasing the Quality of Experience for users, comprising:
■ at least a collector module (6, 6') for collecting, for each user of at least a sample of the whole audience of said video stream, at least information about the position of the gaze of said user on said video stream;
■ at least an estimator module (10, 10', 10") that comprises means for aggregating all of said collected information and means for analysing said aggregated information to identify the main regions of interest (R1, R2, R3, R4) for said video stream according to the number of users' gazes positioned on said regions of interest;
■ a selector module (14) adapted for selecting at least a region of interest (R1, R2, R3) to be displayed on some terminals (1) of said users;
- a server (4) to which users are connected through their terminals (1), said server providing said high definition video stream to said users, said server further comprising:
■ a focus module (15) comprising means for interacting with the selector module (14) of said engine to build at least one ROI video stream (16, 17, 18) comprising a region of interest (R1, R2, R3) selected by said selector module;
■ a streamer module (19) comprising means for providing the ROI video stream (16, 17, 18) to some of said users.

16. Computer program adapted to perform a process according to any of claims 1 to 7.
